Europäisches Patentamt

European Patent Office

Office européen des brevets

(11) Veröffentlichungsnummer: **0 331 761**
**A1**

## (12) EUROPÄISCHE PATENTANMELDUNG

(21) Anmeldenummer: 87116563.5

(22) Anmeldetag: **10.11.87**

(51) Int. Cl.⁴: **F16H 25/22**

(43) Veröffentlichungstag der Anmeldung:
**13.09.89 Patentblatt 89/37**

(84) Benannte Vertragsstaaten:
**AT BE CH DE ES FR GB GR IT LI LU NL SE**

(71) Anmelder: **Rollvis S.A.**
**136, chemin Pont-du-Centenaire**
**CH-1228 Plan-les-Ouates/Genève(CH)**

(72) Erfinder: **Carretero, Joaquin**
**Brunaustrasse 170**
**CH-8951 Fahrweid(CH)**

(74) Vertreter: **Rehmann, Klaus H.**
**Postfach 1310 Hauptbahnhofstrasse**
**D-8720 Schweinfurt(DE)**

(54) **Gewindetrieb mit Satellitenrollen.**

(57) Zur Erhöhung des Wirkungsgrades, der Laufruhe und der Tragzahl sowie zur Reduzierung von
Reibung, Erwärmung und Geräuschentwicklung, wird
auf die beidseitige Verzahnung der Satellitenrollen
verzichtet und pro Satellitenrolle (4) nur noch eine
Verzahnung (5) auf einer Seite der Satellitenrolle (4)
angebracht.

Fig. 1

## Gewindetrieb mit Satellitenrollen

Die Erfindung bezieht sich auf einen Gewindetrieb mit Satellitenrollen nach dem Oberbegriff des Anspruchs 1.

Gewindetriebe mit Satellitenrollen - ohne Rückführung dieser Satellitenrollen - besitzen nach heutigem Stand der Technik (s. CH-PS 380 453) an jedem Ende einer jeden Satellitenrolle je eine Verzahnung, die in einen Zahnkranz an den äußeren Enden der Gewindemutter oder des geteilten, durch einen Distanzring verspannten Mutternsystems eingreifen. Zahnkranz und Verzahnung der Satellitenrollen dienen zur Synchronisation der Drehzahl der Satellitenrollen untereinander. Dadurch wird verhindert, daß die Satellitenrollen aus der Mutter herauswandern, infolge der durch toleranzbedingte Unterschiede in den Gewindedurchmessern und -steigungen der Muttern, der Satellitenrollen und der Spindel entstehenden Drehzahldifferenzen der Satellitenrollen.

Es ist nun erforderlich, daß die linke Verzahnung der Satellitenrolle genau abbildungsgleich und ohne Winkelversatz der rechten Verzahnung entspricht. Ist dies nicht der Fall, so entstehen unter den einzelnen Satellitenrollen im Gewindetrieb, die alle in dieselben linken und rechten Zahnkränze eingreifen, Zwangskräfte an den Zahnflanken, wodurch Reibung und Wärme, verbunden mit einer Verminderung des Wirkungsgrades, sowie ein hakender Lauf und Geräusche entstehen. Der Montageaufwand zur Ausmittlung der Summe aller fertigungsbedingter Differenzen in den Verzahnungen durch gegenseitiges Ausrichten der beiden meist vom Gehäuse getrennte Zahnkränze ist zudem erheblich.

Es ist daher Aufgabe der Erfindung, einen Gewindetrieb mit Satellitenrollen vorzuschlagen, der die obengenannten Nachteile nicht aufweist.

Die Lösung ist im kennzeichnenden Teil des Anspruchs 1 angegeben. Anspruch 2 enthält eine spezielle Ausgestaltung und Anordnung.

Das Problem wird dadurch gelöst, daß pro Satellitenrolle nur noch eine Verzahnung angebracht wird, und zwar nur noch auf einer Seite der Satellitenrolle. Dadurch werden neben erheblichen Kosteneinsparungen folgende technische Vorteile erreicht:
- Weniger Reibung, verbunden mit
- geringerer Erwärmung und somit
- höherer Wirkungsgrad;
- ruhigerer Lauf und
- geringere Geräuschentwicklung
- höhere Tragzahlen und damit höhere mögliche Belastungen und Lebensdauer bei gleicher äußerer Mutterabmessungen, da mehr Gewindegänge zum Eingriff kommen.

Die Erfindung wird anhand von zwei Figuren näher erläutert:

Figur 1 zeigt eine Ausführung gemäß Erfindung im Längsschnitt.

Figur 2 zeigt eine Variante gemäß Erfindung im Längsschnitt und teilweise in der Draufsicht.

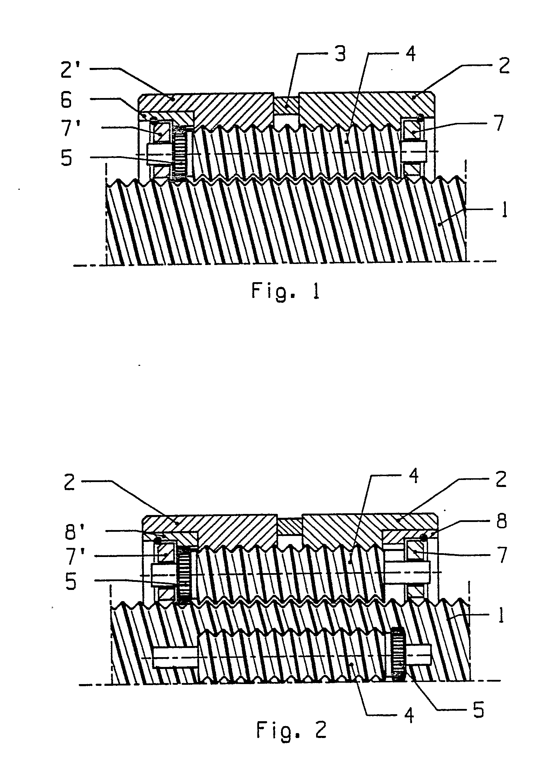

Gemäß Figur 1 besteht der Gewindetrieb aus Gewindespindel 1, Gewindemutter rechts 2, Gewindemutter links 2', Distanzring 3 zur Erzielung einer Vorspannkraft zwischen Gewindemutter 2 und 2', über den Umfang verteilte Satellitenrollen 4 mit nur einseitiger Verzahnung 5 und einem Zahnkranz 6 sowie den beidseitigen Satellitenrollenführungen 7, 7'. Durch die nur einseitige Verzahnung werden alle bei ungenauen beidseitigen Verzahnungen entstehenden Schwierigkeiten vermieden und eine kompakte Einheit erreicht.

Die Figur 2 zeigt eine Variante, bei der die Satellitenrollen 4 mit einseitiger Verzahnung 5 wechselseitig um 180° um ihre Längsachse gedreht angeordnet sind, so daß die Verzahnung 5 einmal in die rechts und einmal in die links angeordneten Zahnkränze 8 und 8' eingreift. Dadurch wird trotz einseitiger Verzahnung eine symmetrischer Aufbau der Vorrichtung mit der daraus sich ergebenden, beidseitig gleichmäßigen Krafteinwirkung erreicht.

## Ansprüche

1. Gewindetrieb mit Satellitenrollen, bestehend insbesondere aus einer Gewindespindel, einer Gewindemutter, Satellitenrollen mit seitlicher Verzahnung, die in eine an der Gewindemutter angebrachten Gegenverzahnung zur Synchronisation der Satellitenrollen-Drehzahlen untereinander eingreift, dadurch gekennzeichnet, daß jede Satellitenrolle (4) nur an einem Ende eine Verzahnung (5) aufweist.

2. Gewindetrieb mit Satellitenrollen gemäß Anspruch 1, dadurch gekennzeichnet, daß die Satellitenrollen (4) jeweils abwechselnd um 180° in ihrer Längsachse gedreht angeordnet sind, so daß die eine Verzahnung (5) pro Satellitenrolle (4) einmal in den rechten (8), einmal in den linken Zahnkranz (8') der Gewindemutter (2, 2') eingreift.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 574 976 (ROANTREE ELECTRO-MECH) * Seite 3, Zeile 40 - Seite 4, Zeile 9; Figur 1 * --- | 1 | F 16 H 25/22 |
| A | FR-A-1 477 775 (STRANDGREN) * Seite 2, Spalte 2, Absätze 3,4; Figur 1 * ----- | 1 | |

| | RECHERCHIERTE SACHGEBIETE (Int. Cl.4) |
|---|---|
| | F 16 H |

Der vorliegende Recherchenbericht wurde für alle Patentansprüche erstellt

| Recherchenort | Abschlußdatum der Recherche | Prüfer |
|---|---|---|
| DEN HAAG | 06-07-1988 | MENDE H. |